# EUROPEAN PATENT APPLICATION

(11) **EP 1 394 772 A1**
(43) Date of publication of application: **03.03.2004**
(21) Application number: 02090308.4
(22) Date of filing: 28.08.2002
(51) Int. Cl.: G10L 19/02, H04B 1/66

(54) **Signaling of window switchings in a MPEG layer 3 audio data stream**

(71) Applicant: DEUTSCHE THOMSON-BRANDT GMBH, 78048 Villingen-Schwenningen (DE)
(72) Inventor: Voessing, Walter, 30455 Hannover (DE)
(74) Representative: Hartnack, Wolfgang, Dipl.-Ing.

(57) **Abstract**

In MPEG-1 Audio Layer 3 following the 'window_switching_ flag', the corresponding 2-bit value of 'block_type' is sent repeatedly although the decoder knows already from the occurrence of the parameter 'window_switching_flag' that a sequence of 'start block', 'short windows', 'stop block' and 'long window' will follow. Therefore transmitting the changing parameter 'block_type' several times is redundant information. According to the invention the superfluous parameter 'block_type' flag is not sent for block type signalling purposes. Instead, the two corresponding bits are used for signalling to the decoder differing subband signal window switching configuration types. These configuration types define in which of the total number of subbands used the window switching is affected, or not affected, by above parameter 'window_switching_flag'. These configuration types can further define different subbands groups fixed or variable within the total number of subbands, that are affected by the parameter 'window_switching_flag'.

## Description

The invention relates to a method and to an apparatus for encoding or decoding an audio signal that is processed using multiple subbands and overlapping window functions, and using extended subband signal window switching configurations.

### Background

In audio coding short term cosine or Fourier transformation is used for generating spectral coefficients from time domain input samples. The coefficients are coded, thereby removing redundancy and irrelevancy. At receiver side the coded coefficients are decoded and inversely transformed into time domain samples. Preferably, the lengths of the transformation blocks are switched from long to short, and vice versa, depending on the current characteristics of the input signal, in order to mask pre-echoes and reduce audible noise arising in blocks with a more or less silent period before a sudden increase of the input signal amplitude.

Independent switching of transformation block length within subbands is used e.g. in the ATRAC compression algorithm as mentioned in EP-A-0 998 051.
Transformation block length switching is also used in ISO/IEC 11172-3 (MPEG-1 Audio Layer 3) and in ISO/IEC 13818-3 (MPEG-2 Audio Layer 3) and in AAC (advanced audio coding).

### Invention

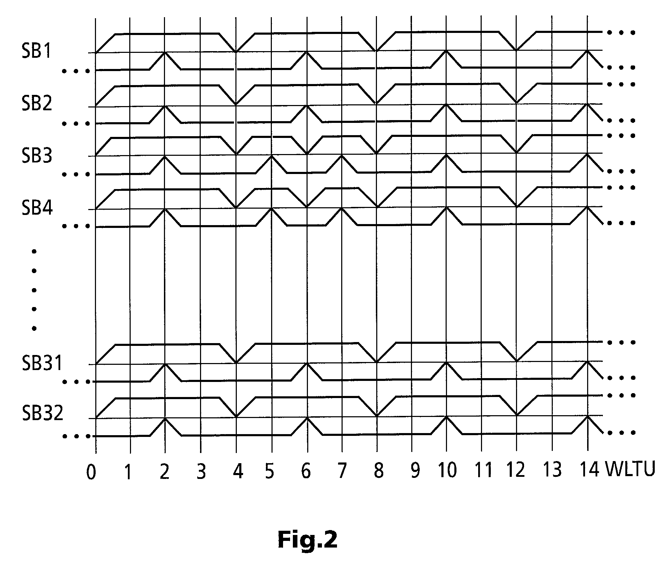

E.g. in MPEG-1 Audio Layer 3 and in MPEG-2 Audio Layer 3 the transform block length switching information or window length switching information is transmitted within the overhead (between 'main_data_begin' and 'main_data') of the frames of the datastream using a flag called 'window_ switching_flag' for each set of coefficients called 'granule'.
The different layers in MPEG-1 Audio and MPEG-2 Audio as well as other audio codecs like the Minidisc system use subband coding/decoding, wherein the total frequency band is split into a predetermined number of subbands, e.g. 32 bands, or into 3 subbands in case of Minidisc. Fig. 2 depicts several subbands SB1 ... SB32, in each of which windowing is used. The lengths of the windows and thus the lengths of the transformations into the spectral domain are given in 'window length time units' WLTU. Real windows/transformation blocks may include between e.g. 12 and 2048 samples at original PCM sampling rates of e.g. 32kHz, 44.1kHz or 48kHz.
The windows are overlapping by e.g. 50%, as shown in Fig. 2. The type of transformation can be an MDCT that uses subsampling by a factor 2 so that the overall quantity of input coefficients is not increased.
The window functions shown in Fig. 2 are symbolic ones only, real window functions have e.g. sine/cosine or Kaiser-Bessel or Fielder shape.

In MPEG-1 Audio Layer 3, in MPEG-2 Audio Layer 3 and in Minidisc codecs it is also possible to select for a given period of the input signal a different transform block or window length in different subbands. In such case the information about which subband or which group of subbands is to be using which transformation or window length needs to be included in the datastream for evaluation in the decoder. E.g. in MPEG-1 Audio Layer 3 and in MPEG-2 Audio Layer 3 this parameter is called 'mixed_block_flag', determining that in the lowest two subbands SB1 and SB2 long blocks only are to be used whereas, in a uniform manner, in the upper 30 subbands the block length will vary between long blocks and short blocks including transition blocks called start blocks and stop blocks. The block or window type is signalled, too, using the 2-bit parameter 'block_type'. If short blocks are used there arises in each case a block type sequence as shown for instance for subbands 3 and 4 in Fig. 2: long block (code 0), start block (code 1, having unsymmetrical window function halves), 3 short blocks (code 2; at least one short block, generally speaking), stop block (code 3, having unsymmetrical window function halves), long block (code 0).

A problem to be solved by the invention is to provide improved adaptation of the allowable block or window lengths or window forms within the total range of subbands. This problem is solved by the methods disclosed in claims 1 and 5. Apparatuses that utilise these methods are disclosed in claims 9 and 10.

For example in MPEG-1 Audio Layer 3 and in MPEG-2 Audio Layer 3, following the 'window_switching_flag', the corresponding 2-bit value of 'block_type' is sent repeatedly although the decoder knows already from the occurrence of the parameter 'window_switching_flag' that the above described sequence of 'start block', 'short window(s)', 'stop block' and 'long window' will follow. Therefore transmitting the changing parameter 'block_type' several times is redundant information.
According to the invention the superfluous parameter 'block_type' flag is not sent for block type signalling purposes. Instead, the two corresponding bits are used for signalling to the decoder differing subband signal window switching configuration types.
These configuration types define in which of the total number of subbands used the window switching is affected by above parameter 'window_switching_flag', or in which of the total number of subbands used the window switching is not affected by the parameter ' window_switching_flag'.
These configuration types can further define different subbands groups fixed within the total number of subbands, that are affected by the parameter 'window_switching_flag'.
These configuration types can further define variable subbands groups within the total number of subbands, that are affected by the parameter 'window_switching_flag'.
Both alternatives can be combined, too.

In principle, the inventive method is suited for encoding an audio signal that is processed using multiple subbands and overlapping window functions into which the signals in the subbands are partitioned,
wherein the resulting sample blocks are in each case transformed into corresponding blocks of spectral domain coefficients and are coded using data reduction,
and wherein different window forms are used and the information about the window forms used is transmitted, recorded or stored in the side information for the coded coefficients, and wherein upon deciding to process, during a given time period, in a first group of subbands the subband signals at least in part with a given sequence of window forms different from the corresponding sequence of window forms used to process the subband signals in a second group of subbands, additional information about such mixing of window forms is transmitted, recorded or stored in said side information, and wherein following such decision to process in a first group of subbands the subband signals at least in part with a given sequence of window forms different from the corresponding sequence of window forms used to process the subband signals in a second group of subbands, information about the window forms used in said given sequence is not transmitted, recorded or stored in said side information, but instead, information about further subband signal window switching configuration types is transmitted, recorded or stored in said side information.

In principle, the inventive method is suited for decoding an audio signal that was processed using multiple subbands and overlapping window functions into which the signals in the subbands are partitioned,
wherein the resulting sample blocks were in each case transformed into corresponding blocks of spectral domain coefficients and are coded using data reduction,
and wherein different window forms were used and the information about the window forms used was transmitted, recorded or stored in the side information for the coded coefficients,
and wherein upon the decision to process, during a given time period, in a first group of subbands the subband signals at least in part with a given sequence of window forms different from the corresponding sequence of window forms used to process the subband signals in a second group of subbands, additional information about such mixing of window forms was transmitted, recorded or stored in said side information,
the decoding including the steps:
- decoding said side information of the received, replayed or read-out signal,
- using said decoded side information, performing data reduction decoding of the received, replayed or read-out code, and in each case inverse transforming said blocks of spectral domain coefficients into corresponding sample blocks,
- assembling said inverse transformed sample blocks using said overlapping window functions and assembling said multiple subband signals into the decoded audio signal,
   wherein upon in said encoding, following such decision to process in a first group of subbands the subband signals at least in part with a given sequence of window forms different from the corresponding sequence of window forms used to process the subband signals in a second group of subbands, in said side information information about the window forms used in said given sequence was not transmitted, recorded or stored but instead information about further subband signal window switching configuration types was transmitted, recorded or stored in said side information,
- evaluating in said decoding said further subband signal window switching configuration type information and selecting the corresponding window forms when assembling said inverse transformed sample blocks using said overlapping window functions and when assembling said multiple subband signals into the decoded audio signal.

In principle the inventive apparatus for encoding an audio signal includes:
- means for processing said audio signal using multiple subbands and overlapping window functions into which the signals in the subbands are partitioned, and for transforming in each case the resulting sample blocks into corresponding blocks of spectral domain coefficients;
- means for coding said coefficients using data reduction,
wherein different window forms are used and the information about the window forms used is attached to the encoded audio signal in the side information for the coded coefficients, and wherein upon deciding to process, during a given time period, in a first group of subbands the subband signals at least in part with a given sequence of window forms different from the corresponding sequence of window forms used to process the subband signals in a second group of subbands, additional information about such mixing of forms of window forms is attached to said side information,
and wherein following such decision to process in a first group of subbands the subband signals at least in part with a given sequence of window forms different from the corresponding sequence of window forms used to process the subband signals in a second group of subbands, said information about the window forms used in said given sequence is not attached to said side information but instead information about further subband signal window switching configuration types.

In principle the inventive apparatus for decoding an audio signal that was processed using multiple subbands and overlapping window functions into which the signals in the subbands are partitioned,
wherein the resulting sample blocks were in each case transformed into corresponding blocks of spectral domain coefficients and are coded using data reduction,
and wherein different window forms were used and the information about the window forms used was transmitted, recorded or stored in the side information for the coded coefficients,
and wherein in the encoding the decision to process, during a given time period, in a first group of subbands the subband signals at least in part with a given sequence of window forms different from the corresponding sequence of window forms used to process the subband signals in a second group of subbands, additional information about such mixing of window forms was transmitted, recorded or stored in said side information, includes:
- means for decoding said side information of the received, replayed or read-out signal,
- means for performing data reduction decoding of the received, replayed or read-out code using said decoded side information, and for inverse transforming in each case said blocks of spectral domain coefficients into corresponding sample blocks, and for assembling said inverse transformed sample blocks using said overlapping window functions and for assembling said multiple subband signals into the decoded audio signal,
wherein in said encoding, following such decision to process in a first group of subbands the subband signals at least in part with a given sequence of window forms different from the corresponding sequence of window forms used to process the subband signals in a second group of subbands, in said side information information about the window forms used in said given sequence was not transmitted, recorded or stored but instead information about further subband signal window switching configuration types was transmitted, recorded or stored in said side information,
and wherein said means for decoding said side information evaluate said further subband signal window switching configuration type information, which is then used for selecting the corresponding window forms when assembling said inverse transformed sample blocks using said overlapping window functions and when assembling said multiple subband signals into the decoded audio signal in said means for performing data reduction decoding, inverse transform and assembling.

Advantageous additional embodiments of the invention are disclosed in the respective dependent claims.

### Drawings

Exemplary embodiments of the invention are described with reference to the accompanying drawings, which show in:
- Fig. 1: block diagram of an encoder that can carry out the invention;
- Fig. 2: locations of windows within frequency subbands;
- Fig. 3: block diagram of a decoder that can carry out the invention.

### Exemplary embodiments

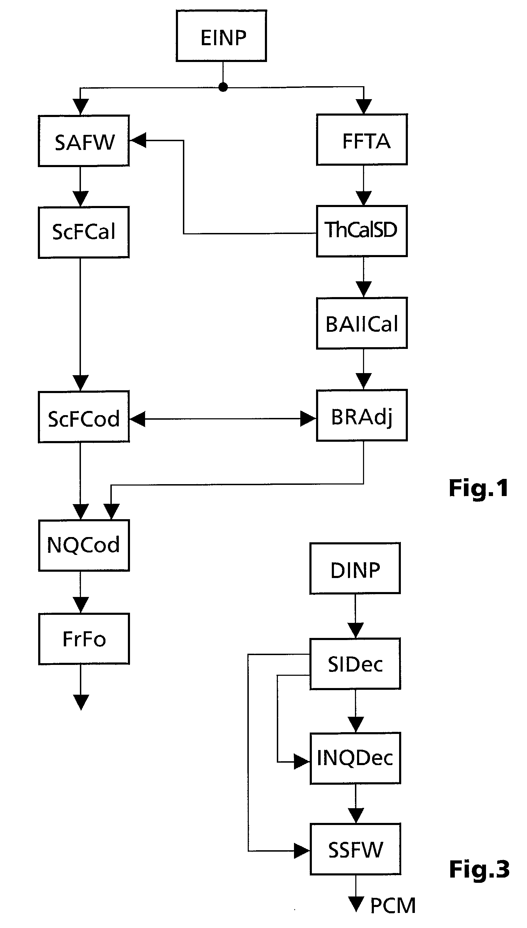

In Fig. 1 the encoder input signal is received in block EINP. Stage SAFW carries out subband analysis filtering (i.e. generating the above 32 subband signals), windowing and transformation into the spectral domain. Stage ScFCal calculates the scale factors form the spectral coefficients. Stage ScFCod codes the scale factors, using side information received from stage BRAdj. Stage NQCod carries out normalisation. quantisation and coding of the coefficients from the subbands, thereby using side information from stage BRAdj. Stage FrFo performs formatting of the audio frames to be transmitted, recorded or stored.
Stage FFTA performs an FFT analysis (fast Fourier transform) of the input signal EINP in parallel, in order to provide a source for psycho-acoustic information. The subsequent stage ThCalSD calculates therefrom the masking thresholds and signal/masking ratios, and determines the window switching information required for the subbands. That window switching information is applied in stage SAFW to the subband signals and to the corresponding transformation operations. Stage BAllCal calculates the required bit allocation. The subsequent stage BRAdj controls the adjustment to the desired fixed bit rate by sending corresponding control signals to stages ScFCod and NQCod.
One channel only of two (stereo) or more channels is depicted, whereby the stages FFTA, ThCalSD, BAllCal and BRAdj are normally used for all channels in common.

In Fig. 2 the decoder input signal is received, replayed or read out in block DINP. Stage SIDec decodes the side information generated in the encoder and required by the decoder, e.g. scale factor information, bit allocation information, window switching information, normalisation information, quantisation information and threshold information. Stage SIDec controls the subsequent stages INQDec and SSFW. Stage INQDec performs inverse coding, inverse quantisation and inverse normalisation on the received or replayed coefficients from the subbands. Stage SSFW carries out inverse transformation, corresponding window switching and subband synthesis filtering, and provides the output PCM samples.
One channel only of two (stereo) or more channels is depicted.

The inventive window switching - as indicated using the example in Fig. 2 with subbands 1/2, 3/4 and 31/32 - using differing subband signal window switching configuration types is applied in stage SAFW in the encoder and in stage SSFW in the decoder. The information about the configuration type to be selected is determined in stage ThCalSD, transferred, and evaluated in stage SIDec in the decoder.

The invention can be used in extended systems based on MPEG-1 Audio Layer 3, MPEG-2 Audio Layer 3, or AAC, for example.

## Claims

1. Method for encoding an audio signal that is processed (SAFW) using multiple subbands (SB1 ... SB32) and overlapping window functions into which the signals in the subbands are partitioned,
wherein the resulting sample blocks are in each case transformed (SAFW) into corresponding blocks of spectral domain coefficients and are coded (ScFCod, NQCod) using data reduction,
and wherein different window forms are used and the information (block_type) about the window forms used is transmitted, recorded or stored in the side information for the coded coefficients,
and wherein upon deciding to process, during a given time period, in a first group (SB1, SB2) of subbands the subband signals at least in part with a given sequence of window forms different from the corresponding sequence of window forms used to process the subband signals in a second group (SB3 ... SB32) of subbands, transmitting, recording or storing in said side information additional information (mixed_block_flag) about such mixing of window forms,
**characterised by** the steps:
- following such decision to process in a first group (SB1, SB2) of subbands the subband signals at least in part with a given sequence of window forms different from the corresponding sequence of window forms used to process the subband signals in a second group (SB3 ... SB32) of subbands, not transmitting, recording or storing in said side information information (block_type) about the window forms used in said given sequence;
- instead, transmitting, recording or storing in said side information information about further subband signal window switching configuration types.

2. Method according to claim 1, wherein said audio signal is an MPEG-1 Audio Layer 3, MPEG-2 Audio Layer 3, or AAC audio signal.

3. Method according to claim 1 or 2, wherein said configuration types define in which of the total number of subbands used the window switching is affected, or not affected, by said additional information (mixed_block_flag) about mixing of window forms.

4. Method according to claim 3, wherein said configuration types further define different subbands groups fixed within the total number of subbands, that are affected by said additional information (mixed_block_flag),
and/or wherein said configuration types further define variable subbands groups within the total number of subbands, that are affected by said additional information (mixed_block_flag).

5. Method for decoding an audio signal that was processed (SAFW) using multiple subbands (SB1 ... SB32) and overlapping window functions into which the signals in the subbands are partitioned,
wherein the resulting sample blocks were in each case transformed (SAFW) into corresponding blocks of spectral domain coefficients and are coded (ScFCod, NQCod) using data reduction,
and wherein different window forms were used and the information (block_type) about the window forms used was transmitted, recorded or stored in the side information for the coded coefficients,
and wherein upon the decision to process, during a given time period, in a first group (SB1, SB2) of subbands the subband signals at least in part with a given sequence of window forms different from the corresponding sequence of window forms used to process the subband signals in a second group (SB3 ... SB32) of subbands, additional information (mixed_block_flag) about such mixing of window forms was transmitted, recorded or stored in said side information,
the decoding including the steps:
- decoding (SIDec) said side information of the received, replayed or read-out signal,
- using said decoded side information, performing data reduction decoding (INQDec) of the received, replayed or read-out code, and in each case inverse transforming (SSFW) said blocks of spectral domain coefficients into corresponding sample blocks,
- assembling (SSFW) said inverse transformed sample blocks using said overlapping window functions and assembling (SSFW) said multiple subband signals (SB1 ... SB32) into the decoded audio signal (PCM),
**characterised by** the step:
wherein upon in said encoding, following such decision to process in a first group (SB1, SB2) of subbands the subband signals at least in part with a given sequence of window forms different from the corresponding sequence of window forms used to process the subband signals in a second group (SB3 ... SB32) of subbands, in said side information information (block_type) about the window forms used in said given sequence was not transmitted, recorded or stored but instead information about further subband signal window switching configuration types was transmitted, recorded or stored in said side information, evaluating (SIDec) in said decoding said further subband signal window switching configuration type information and selecting the corresponding window forms when assembling (SSFW) said inverse transformed sample blocks using said overlapping window functions and when assembling (SSFW) said multiple subband signals (SB1 ... SB32) into the decoded audio signal (PCM).

6. Method according to claim 5, wherein said audio signal is an MPEG-1 Audio Layer 3, MPEG-2 Audio Layer 3, or AAC audio signal.

7. Method according to claim 5 or 6, wherein said configuration types define in which of the total number of subbands used the window switching is affected, or not affected, by said additional information (mixed_block_flag) about mixing of window forms.

8. Method according to claim 7, wherein said configuration types further define different subbands groups fixed within the total number of subbands, that are affected by said additional information (mixed_block_flag),
and/or wherein said configuration types further define variable subbands groups within the total number of subbands, that are affected by said additional information (mixed_block_flag).

9. Apparatus for encoding an audio signal, including:
- means (SAFW) for processing said audio signal using multiple subbands (SB1 ... SB32) and overlapping window functions into which the signals in the subbands are partitioned, and for transforming in each case the resulting sample blocks into corresponding blocks of spectral domain coefficients;
- means (ScFCal, ScFCod, NQCod, FFTA, ThCalSD, BAllCal, BRAdj) for coding said coefficients using data reduction,
wherein different window forms are used and the information (block_type) about the window forms used is attached to the encoded audio signal in the side information for the coded coefficients,
and wherein upon deciding to process, during a given time period, in a first group (SB1, SB2) of subbands the subband signals at least in part with a given sequence of window forms different from the corresponding sequence of window forms used to process the subband signals in a second group (SB3 ... SB32) of subbands, additional information (mixed_block_flag) about such mixing of forms of window forms is attached to said side information, and wherein following such decision to process in a first group (SB1, SB2) of subbands the subband signals at least in part with a given sequence of window forms different from the corresponding sequence of window forms used to process the subband signals in a second group (SB3 ... SB32) of subbands, said information (block_type) about the window forms used in said given sequence is not attached to said side information but instead information about further subband signal window switching configuration types.

10. Apparatus for decoding an audio signal that was processed (SAFW) using multiple subbands (SB1 ... SB32) and overlapping window functions into which the signals in the subbands are partitioned,
wherein the resulting sample blocks were in each case transformed (SAFW) into corresponding blocks of spectral domain coefficients and are coded (ScFCod, NQCod) using data reduction,
and wherein different window forms were used and the information (block_type) about the window forms used was transmitted, recorded or stored in the side information for the coded coefficients,
and wherein in the encoding the decision to process, during a given time period, in a first group (SB1, SB2) of subbands the subband signals at least in part with a given sequence of window forms different from the corresponding sequence of window forms used to process the subband signals in a second group (SB3 ... SB32) of subbands, additional information (mixed_block_flag) about such mixing of window forms was transmitted, recorded or stored in said side information, said apparatus including:
means (SIDec) for decoding said side information of the received, replayed or read-out signal,
- means (INQDec, SSFW) for performing data reduction decoding of the received, replayed or read-out code using said decoded side information, and for inverse transforming in each case said blocks of spectral domain coefficients into corresponding sample blocks, and for assembling said inverse transformed sample blocks using said overlapping window functions and for assembling said multiple subband signals (SB1 ... SB32) into the decoded audio signal (PCM),
wherein in said encoding, following such decision to process in a first group (SB1, SB2) of subbands the subband signals at least in part with a given sequence of window forms different from the corresponding sequence of window forms used to process the subband signals in a second group (SB3 ... SB32) of subbands, in said side information information (block_type) about the window forms used in said given sequence was not transmitted, recorded or stored but instead information about further subband signal window switching configuration types was transmitted, recorded or stored in said side information,
and wherein said means (SIDec) for decoding said side information evaluate said further subband signal window switching configuration type information, which is then used for selecting the corresponding window forms when assembling said inverse transformed sample blocks using said overlapping window functions and when assembling said multiple subband signals into the decoded audio signal (PCM) in said means (INQDec, SSFW) for performing data reduction decoding, inverse transform and assembling.
